(19) Europäisches Patentamt
European Patent Office
Office européen des brevets

(11) EP 3 008 743 B1

(12) # EUROPÄISCHE PATENTSCHRIFT

(45) Veröffentlichungstag und Bekanntmachung des Hinweises auf die Patenterteilung:
**30.08.2017 Patentblatt 2017/35**

(21) Anmeldenummer: **14741570.7**

(22) Anmeldetag: **16.07.2014**

(51) Int Cl.:
***H01H 9/54*** *(2006.01)* ***H01H 33/59*** *(2006.01)*
***H02H 3/087*** *(2006.01)* ***H02H 7/26*** *(2006.01)*

(86) Internationale Anmeldenummer:
**PCT/EP2014/065254**

(87) Internationale Veröffentlichungsnummer:
**WO 2015/010993 (29.01.2015 Gazette 2015/04)**

(54) **GLEICHSTROMSCHALTEINRICHTUNG**

DC SWITCHING DEVICE

DISPOSITIF DE COMMUTATION À COURANT CONTINU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2013 DE 102013214627**

(43) Veröffentlichungstag der Anmeldung:
**20.04.2016 Patentblatt 2016/16**

(73) Patentinhaber: **Siemens Aktiengesellschaft**
**80333 München (DE)**

(72) Erfinder: **JÄNICKE, Lutz-Rüdiger**
**15831 Mahlow (DE)**

(56) Entgegenhaltungen:
**EP-A2- 0 418 755**
**WO-A1-2013/071980**
**DE-A1- 10 002 870**
**JP-A- 2000 260 271**
**US-A1- 2002 171 983**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 008 743 B1

Printed by Jouve, 75001 PARIS (FR)

## Beschreibung

Die Erfindung bezieht sich auf eine Gleichstromschalteinrichtung zum Schalten von Gleichströmen, insbesondere Gleichströmen im Kiloamperbereich, mit einer elektrischen Reihenschaltung, die einen ersten und einen zweiten Schalter umfasst, wobei der erste Schalter ein mechanischer Schalter ist und zum Schalten ein bewegliches Kontaktsystem aufweist, und einem Halbleiterleistungsschalter, der parallel zu der Reihenschaltung geschaltet ist.

Eine derartige Schalteinrichtung ist aus dem Konferenzbeitrag "Proactive Hybrid HVDC Breakers - A key innovation for reliable HVDC grids" (Jürgen Häfner und Björn Jacobson, Cigré-Konferenz, Bologna 2011) beschrieben. Die vorbekannte Gleichstromschalteinrichtung dient zum Schalten von Gleichströmen, insbesondere Gleichströmen im kA-Bereich. Sie weist eine elektrische Reihenschaltung aus zwei Schaltern auf, wobei einer der beiden Schalter ein mechanischer Schalter und der andere Schalter ein Halbleiterschalter ist. Parallel zu der Reihenschaltung ist ein Halbleiterleistungsschalter geschaltet. Im eingeschalteten Zustand fließt der Gleichstrom durch die Reihenschaltung aus dem mechanischen Schalter und dem Halbleiterschalter. Soll die vorbekannte Gleichstromschalteinrichtung ausgeschaltet werden, so ist stets ein Einbeziehen aller drei Schalter erforderlich. Das Abschalten erfolgt wie folgt: Zunächst wird der Halbleiterleistungsschalter gezündet bzw. eingeschaltet, so dass ein Stromfluss durch diesen Halbleiterleistungsschalter ermöglicht wird. Der Strom durch die Reihenschaltung aus dem mechanischen Schalter und dem Halbleiterschalter nimmt aufgrund des Parallelschaltens des Halbleiterleistungsschalters ab. Anschließend wird der Halbleiterschalter abgeschaltet, so dass der mechanische Schalter stromfrei wird und stromfrei abgeschaltet werden kann. Nachdem der mechanische Schalter ausgeschaltet ist, wird in einem weiteren Schritt der Halbleiterleistungsschalter wieder abgeschaltet.

Aus der DE 100 02 870 A1 ist eine Vorrichtung zum Begrenzen eines Stromes für Schaltanlagen im Hoch- oder Mittelspannungsbereich bekannt. Ein Vakuumschalter ist in Reihe zu einer zweiten Schaltstelle geschaltet. Eine leistungselektronische Schaltvorrichtung ist parallel dazu geschaltet und umfasst Gruppen von Halbleitern.

Der Erfindung liegt die Aufgabe zugrunde, eine Gleichstromschalteinrichtung anzugeben, die ein besonders gutes Schaltverhalten beim Ausschalten sowie außerdem besonders gute elektrische Eigenschaften im eingeschalteten Zustand aufweist.

Diese Aufgabe wird erfindungsgemäß durch eine Gleichstromschalteinrichtung mit den Merkmalen gemäß Patentanspruch 1 gelöst. Vorteilhafte Ausgestaltungen der erfindungsgemäßen Gleichstromschalteinrichtung sind in Unteransprüchen angegeben.

Danach ist erfindungsgemäß vorgesehen, dass der zweite Schalter der Reihenschaltung ebenfalls ein mechanischer Schalter ist und zum Schalten ebenfalls ein bewegliches Kontaktsystem aufweist und das bewegliche Kontaktsystem des zweiten Schalters derart ausgestaltet ist, dass es schneller als das bewegliche Kontaktsystem des ersten Schalters schalten kann.

Ein wesentlicher Vorteil der erfindungsgemäßen Gleichstromschalteinrichtung ist darin zu sehen, dass die elektrischen Verluste der Gleichstromschalteinrichtung im eingeschalteten Zustand kleiner als die der vorbekannten, oben beschriebenen Gleichstromschalteinrichtung sind. Dies liegt daran, dass mechanische Schalter mit beweglichen Kontaktsystemen im eingeschalteten Zustand näherungsweise widerstandsfrei und somit verlustfrei sind. Im Unterschied dazu weisen Halbleiterschalter aufgrund der im eingeschalteten Zustand an ihnen abfallenden Flussspannung stets eine nicht vernachlässigbare Verlustleistung auf.

Ein weiterer wesentlicher Vorteil der erfindungsgemäßen Gleichstromschalteinrichtung ist darin zu sehen, dass zum Ausschalten lediglich zwei der drei Schalter betätigt werden müssen, nämlich einer der beiden mechanischen Schalter und der Halbleiterleistungsschalter. Dieser Sachverhalt ermöglicht es, die beiden mechanischen Schalter unterschiedlich auszugestalten und einen der beiden Schalter, hier "erster" Schalter genannt, speziell für das Ausschalten bei Vorliegen von Abschaltbedienbefehlen auszulegen; der andere Schalter, hier "zweiter" Schalter genannt, kann als schneller Schalter speziell für das Ausschalten von Fehlerströmen, insbesondere Kurzschlussströmen, ausgelegt werden. Je nach Schaltfall, also Normalbetriebsschaltfall oder Fehlerschaltfall, kann dann der jeweils für diesen Schaltfall ausgelegte Schalter betätigt werden.

Um sicherzustellen, dass die Reihenschaltung der beiden mechanischen Schalter durch Ausschalten nur eines der beiden Schalter sicher abgeschaltet werden kann, wird es als vorteilhaft angesehen, wenn der erste und zweite Schalter im ausgeschalteten Zustand jeweils für sich allein geeignet sind, die im Netzbetrieb im ausgeschalteten Zustand der Gleichstromschalteinrichtung an der Gleichstromschalteinrichtung anliegende Netzspannung allein zu halten.

Um zu ermöglichen, dass ein "normales" Abschalten aufgrund eines Abschaltbedienbefehls anders gehandhabt wird als ein Abschalten im Falle eines Fehlers, insbesondere Kurzschlusses, weist die Gleichstromschalteinrichtung eine Steuereinrichtung auf, die im Falle eines Fehlers, insbesondere eines Kurzschlusses, zum Abschalten des Fehlerstromes, insbesondere des Kurzschlussstromes, ausschließlich den Halbleiterleistungsschalter und den zweiten Schalter und während des Normalbetriebs im Falle einer Betriebshandlung zum Ausschalten des Normalbetriebstromes ausschließlich den Halbleiterleistungsschalter und den ersten Schalter betätigt.

Besonders vorteilhaft ist es, wenn die Steuereinrichtung derart ausgestaltet ist, dass sie, ausgehend vom eingeschalteten Zustand der Gleichstromschalteinrichtung, bei dem der Halbleiterleistungsschalter ausgeschaltet und der erste und zweite Schalter eingeschaltet sind, im Falle eines Fehlers, insbesondere eines Kurzschlusses, zunächst den Halbleiterleistungsschalter einschaltet und den Fehlerstrom, insbesondere Kurzschlussstrom, zumindest zum Teil durch den Halbleiterleistungsschalter lenkt, anschließend den zweiten Schalter ausschaltet und den ersten Schalter eingeschaltet lässt und nach dem Ausschalten des zweiten Schalters den Halbleiterleistungsschalter abschaltet, und im Normalbetrieb im Falle einer Betriebshandlung zum Ausschalten des Normalbetriebstromes zunächst den Halbleiterleistungsschalter einschaltet und den Normalbetriebstrom zumindest zum Teil durch den Halbleiterleistungsschalter lenkt, anschließend den ersten Schalter ausschaltet und den zweiten Schalter eingeschaltet lässt und nach dem Ausschalten des ersten Schalters den Halbleiterleistungsschalter abschaltet.

Um ein Abschalten im Falle eines Fehlers und ein Abschalten im Normalbetrieb individuell optimal handhaben zu können, wird es als vorteilhaft angesehen, wenn die Gleichstromschalteinrichtung ein Kurzschlusssteuermodul zur Handhabung eines Fehlers, insbesondere eines Kurzschlusses, und ein Betriebsmodul zum Handhaben eines Ausschaltbefehls während des Normalbetriebs aufweist.

Besonders vorteilhaft ist es, wenn das Kurzschlusssteuermodul einen Eingang zum Einspeisen eines einen Fehler, insbesondere Kurzschluss, anzeigenden Fehlersignals aufweist und das Betriebsmodul einen Eingang zum Einspeisen eines einen Abschaltbedienbefehl anzeigenden Bediensignals aufweist.

Vorzugsweise ist das Kurzschlusssteuermodul derart ausgestaltet, dass es, ausgehend vom eingeschalteten Zustand der Gleichstromschalteinrichtung, bei dem der Halbleiterleistungsschalter ausgeschaltet und der erste und zweite Schalter eingeschaltet sind, im Falle eines Vorliegens eines Fehlersignals zunächst den Halbleiterleistungsschalter einschaltet und den Fehlerstrom, insbesondere Kurzschlussstrom, zumindest zum Teil durch den Halbleiterleistungsschalter lenkt, anschließend den zweiten Schalter ausschaltet und den ersten Schalter eingeschaltet lässt und nach dem Ausschalten des zweiten Schalters den Halbleiterleistungsschalter abschaltet.

Bezüglich des Betriebsmoduls wird es als vorteilhaft angesehen, wenn das Betriebsmodul derart ausgestaltet ist, dass es, ausgehend vom eingeschalteten Zustand der Gleichstromschalteinrichtung, bei dem der Halbleiterleistungsschalter ausgeschaltet und der erste und zweite Schalter eingeschaltet sind, im Falle eines Vorliegens eines Bediensignals zunächst den Halbleiterleistungsschalter einschaltet und den Normalbetriebsstrom zumindest zum Teil durch den Halbleiterleistungsschalter lenkt, anschließend den ersten Schalter ausschaltet und den zweiten Schalter eingeschaltet lässt und nach dem Ausschalten des ersten Schalters den Halbleiterleistungsschalter abschaltet.

Wie bereits erwähnt, dient der erste Schalter zum Ausschalten im Normalbetrieb und der zweite Schalter zum Ausschalten im Falle eines Fehlers. Demgemäß wird es als vorteilhaft angesehen, wenn die Schaltzeiten der beiden Schalter deutlich unterschiedlich bemessen sind und mindestens um den Faktor 5 voneinander abweichen. Vorzugsweise weist der zweite Schalter eine Schaltzeit von maximal 2 Millisekunden auf; bei dem ersten Schalter sind hingegen Schaltzeiten von 10 Millisekunden oder mehr akzeptabel.

Da Schalthandlungen im Normalbetrieb deutlich häufiger vorkommen als Schalthandlungen im Falle eines Fehlers, wird es als vorteilhaft angesehen, wenn der erste Schalter konstruktiv für eine Anzahl von nominal mindestens 1000 Schalthandlungen und der zweite Schalter konstruktiv für eine Anzahl von nominal maximal 100 Schalthandlungen ausgelegt ist.

Die Erfindung bezieht sich darüber hinaus auf ein Verfahren zum Abschalten einer Gleichstromschalteinrichtung zum Schalten von Gleichströmen, insbesondere Gleichströmen im Kiloamperbereich, mit einer elektrischen Reihenschaltung, die einen ersten und einen zweiten Schalter umfasst, und mit einem Halbleiterleistungsschalter, der parallel zu der Reihenschaltung geschaltet ist, wobei der erste und zweite Schalter jeweils ein mechanischer Schalter ist und zum Schalten ein bewegliches Kontaktsystem aufweist und der zweite Schalter eine kürzere Schaltzeit als der erste Schalter aufweist, und wobei bei dem Verfahren im Falle eines Fehlers, insbesondere eines Kurzschlusses, zum Abschalten des Fehlerstromes, insbesondere des Kurzschlussstromes, ausschließlich der Halbleiterleistungsschalter und der zweite Schalter und während des Normalbetriebs im Falle einer Betriebshandlung zum Ausschalten des Normalbetriebstromes ausschließlich der Halbleiterleistungsschalter und der erste Schalter betätigt werden.

Bezüglich der Vorteile des erfindungsgemäßen Verfahrens sei auf die obigen Ausführungen im Zusammenhang mit der erfindungsgemäßen Gleichstromschalteinrichtung verwiesen, da die Vorteile des erfindungsgemäßen Verfahrens denen der erfindungsgemäßen Gleichstromschalteinrichtung im Wesentlichen entsprechen.

Als besonders vorteilhaft wird es angesehen, wenn im Falle einer Betriebshandlung zum Ausschalten des Normalbetriebsstromes und im Falle eines Eintretens eines Fehlers, insbesondere Kurzschlusses, nach der Betriebshandlung und während des Ausschaltens des ersten Schalters parallel der zweite Schalter ausgeschaltet wird und nach dem Ausschalten des ersten und/oder zweiten Schalters der Halbleiterleistungsschalter abgeschaltet wird.

Die Erfindung wird nachfolgend anhand von Ausführungsbeispielen näher erläutert; dabei zeigen beispielhaft

Figur 1 ein Ausführungsbeispiel für eine erfindungsgemäße Gleichstromschalteinrichtung,

Figur 2 die Gleichstromschalteinrichtung gemäß Figur 1 im eingeschalteten Zustand,

Figuren 3-5 die Arbeitsweise der Gleichstromschalteinrichtung gemäß Figur 1 für den Fall, dass ein einen Abschaltbedienbefehl anzeigendes Bediensignal vorliegt,

Figuren 6-8 die Arbeitsweise der Gleichstromschalteinrichtung gemäß Figur 1 bei Vorliegen eines Fehlersignals, das einen Fehler, insbesondere Kurzschluss, anzeigt,

Figuren 9-12 beispielhaft die Arbeitsweise der Gleichstromschalteinrichtung gemäß Figur 1 für den Fall, dass zunächst ein Bediensignal, das einen Abschaltbedienbefehl anzeigt, und anschließend ein Fehlersignal zur Gleichstromschalteinrichtung gelangt, und

Figur 13 ein weiteres Ausführungsbeispiel für eine erfindungsgemäße Gleichstromschalteinrichtung.

In den Figuren werden der Übersicht halber für identische oder vergleichbare Komponenten stets dieselben Bezugszeichen verwendet.

Die Figur 1 zeigt eine Gleichstromschalteinrichtung 10, die eine Reihenschaltung R mit zwei elektrisch in Reihe geschalteten elektrischen Schaltern 20 und 30 aufweist. Bei den beiden Schaltern 20 und 30 handelt es sich um mechanische Schalter, die jeweils ein bewegliches Kontaktsystem aufweisen. Das Ein- und Ausschalten der beiden Schalter 20 und 30 erfolgt jeweils durch Bewegen eines oder mehrerer Kontakte des jeweiligen Kontaktsystems.

Elektrisch parallel zu der Reihenschaltung R ist ein Halbleiterleistungsschalter 40 geschaltet.

Der zweite Schalter 30 bzw. das bewegliche Kontaktsystem des zweiten Schalters 30 ist derart ausgestaltet, dass es schneller als das bewegliche Kontaktsystem des ersten Schalters 20 schalten kann. Vorzugsweise weist der zweite Schalter 30 eine Schaltzeit von maximal 2 ms auf. Die Schaltzeit des ersten Schalters 20 ist deutlich länger und beträgt vorzugsweise mindestens 10 ms. Die längere Schaltzeit des ersten Schalters 20 gegenüber der des zweiten Schalters 30 wird durch eine stabilere, schwerere Ausführung des Kontaktsystems hervorgerufen, durch die im Gegenzug eine deutlich größere Anzahl an Schalthandlungen innerhalb der Lebensdauer des ersten Schalters 20 als beim zweiten Schalter 30 erreicht wird, unter Inkaufnahme einer längeren Schaltzeit.

Wie weiter unten noch näher im Detail erläutert werden wird, dient der erste Schalter 20 dazu, die Gleichstromschalteinrichtung 10 im Normalbetrieb, also im Falle eines Bediensignals, das einen Abschaltbedienbefehl anzeigt, auszuschalten. Aus diesem Grunde ist der erste Schalter 20 konstruktiv vorzugsweise auf eine Anzahl von nominal mindestens 1000 Schalthandlungen ausgelegt. Im Unterschied dazu dient der zweite Schalter 30 dazu, die Gleichstromschalteinrichtung 10 im Fehlerfall, also im Falle eines Fehlers, insbesondere Kurzschlusses, besonders schnell auszuschalten. Aus diesem Grunde ist es ausreichend, wenn der zweite Schalter 30 konstruktiv für eine Anzahl von nominal maximal 100 Schalthandlungen ausgelegt ist, aber im Unterschied zum ersten Schalter besonders schnell schalten kann.

Zur Ansteuerung der beiden mechanischen Schalter 20 und 30 sowie des Halbleiterleistungsschalters 40 weist die Gleichstromschalteinrichtung 10 eine Steuereinrichtung 50 auf, die mit einem Kurzschlusssteuermodul 60 sowie einem Betriebsmodul 70 ausgestattet ist.

Das Kurzschlusssteuermodul 60 weist einen Eingang 60a zum Einspeisen eines einen Fehler, insbesondere Kurzschluss, anzeigenden Fehlersignals F auf. Das Kurzschlusssteuermodul 60 ist derart ausgestaltet, dass es ausgehend vom eingeschalteten Zustand der Gleichstromschalteinrichtung 10, bei dem der Halbleiterleistungsschalter 40 ausgeschaltet und der erste Schalter 20 und der zweite Schalter 30 eingeschaltet sind, im Falle des Vorliegens des Fehlersignals F zunächst den Halbleiterleistungsschalter 40 einschaltet und den Fehlerstrom zumindest zum Teil durch den Halbleiterleistungsschalter 40 lenkt. Anschließend öffnet das Kurzschlusssteuermodul 60 den zweiten Schalter 30, wobei der erste Schalter 20 eingeschaltet bleibt. Nach dem Ausschalten des zweiten Schalters 30 schaltet das Kurzschlusssteuermodul 60 dann den Halbleiterleistungsschalter 40 ab. Durch das Ausschalten des zweiten Schalters 30 wird eine besonders kurze Abschaltzeit erreicht, was im Fehlerfall von besonderer Bedeutung ist.

Das Betriebsmodul 70 ist mit einem Eingang 70a ausgestattet, an dem sich ein Bediensignal B, das einen Abschaltbedienbefehl anzeigt, einspeisen lässt. Das Betriebsmodul 70 dient für den Normalbetrieb und ist derart ausgestaltet, dass es ausgehend vom eingeschalteten Zustand der Gleichstromschalteinrichtung 10, bei dem der Halbleiterleistungsschalter 40 ausgeschaltet und die beiden mechanischen Schalter 20 und 30 eingeschaltet sind, im Falle eines Vorliegens des Bediensignals B zunächst den Halbleiterleistungsschalter 40 einschaltet und den Normalbetriebstrom zumindest zum Teil durch den Halbleiterleistungsschalter 40 lenkt. Anschließend schaltet das Betriebsmodul 70 den ersten Schalter 20 aus, wobei der zweite Schalter 30 eingeschaltet bleibt, und schaltet nach dem Ausschalten des ersten Schalters 20 den Halbleiterleistungsschalter 40 wieder ab. Im Normalbetrieb kommt es auf keine besonders kurze Abschaltzeit an, so dass die längere Abschaltzeit des ersten Schalters 20 im Vergleich zum zweiten Schalter 30 in Kauf genommen werden kann. Aufgrund der stabileren Ausführung des ersten Schalters 20 gegenüber dem zweiten Schalter 30 ist das Ausschalten mit dem ersten Schalter 20 veschleißärmer als es das Ausschalten mit dem zweiten Schalter 30 wäre.

Die Figur 2 zeigt die Gleichstromschalteinrichtung 10 im eingeschalteten Zustand, in dem sowohl der erste Schalter 20 als auch der zweite Schalter 30 eingeschaltet sind. Der Halbleiterleistungsschalter 40 ist bei dem Schaltzustand gemäß Figur 2 ausgeschaltet.

Ausgehend von dem in der Figur 2 dargestellten eingeschalteten Zustand der Gleichstromschalteinrichtung wird nachfolgend im Zusammenhang mit den Figuren 3 bis 5 beispielhaft im Detail erläutert, wie die Steuereinrichtung 50 im Falle eines Bediensignals B, das einen Abschaltbedienbefehl anzeigt, arbeitet.

Die Figur 3 zeigt den Zustand der Gleichstromschalteinrichtung 10, nachdem das Bediensignal B eingespeist wurde und das Betriebsmodul 70 den Halbleiterleistungsschalter 40 mittels eines Zündsignals ZS eingeschaltet hat, so dass der von der Gleichstromschalteinrichtung zu schaltende Gleichstrom I auf die beiden Zweige der aus der Reihenschaltung R und dem Halbleiterleistungsschalter 40 gebildeten Parallelschaltung aufgeteilt wird. Der durch die Reihenschaltung R fließende Stromanteil ist in der Figur 3 mit dem Bezugszeichen I1 und der durch den Halbleiterleistungsschalter 40 fließende Strom mit dem Bezugszeichen I2 gekennzeichnet. Es gilt:

$$I = I1 + I2 \text{ (vgl. Figur 3)}$$

Nachdem der Halbleiterleistungsschalter 40 eingeschaltet worden ist und der Stromanteil I2 des auszuschaltenden Gleichstroms I durch den Halbleiterleistungsschalter 40 fließt, wird das Betriebsmodul 70 den ersten, langsam schaltenden Schalter 20 mittels eines Schaltsignals S1 öffnen, wodurch der Stromfluss durch die Reihenschaltung R relativ langsam unterbrochen wird (vgl. Figur 4). Während des Ausschaltens des ersten, langsam schaltenden Schalters 20 wird es zu einem Umsteuern bzw. Umlenken des zu schaltenden Gleichstroms I derart kommen, dass der Strom I1 durch die Reihenschaltung R auf 0 absinkt, wohingegen der Strom I2 durch den Halbleiterleistungsschalter 40 entsprechend ansteigt.

Sobald der erste Schalter 20 vollständig ausgeschaltet ist, wovon das Betriebsmodul 70 beispielsweise nach Ablauf einer modulindividuell vorgegebenen Zeitspanne ausgeht, wird das Betriebsmodul 70 den Stromfluss durch Abschalten des Halbleiterleistungsschalters 40 mittels eines Abschaltsignals Sa vollständig unterbrechen. Die Gleichstromschalteinrichtung 10 ist ausgeschaltet, es fließt kein Strom mehr (vgl. Figur 5).

Im Zusammenhang mit den Figuren 6 bis 8 wird nachfolgend im Detail erläutert, wie die Steuereinrichtung 50 der Gleichstromschalteinrichtung 10 arbeitet, wenn an dem Eingang 60a des Kurzschlusssteuermoduls 60 ein Fehlersignal F eingeht, das einen Fehler, insbesondere Kurzschluss, anzeigt. Im Falle des Vorliegens eines Fehlersignals F soll die Gleichstromschalteinrichtung 10 besonders schnell ausgeschaltet werden.

Sobald das Fehlersignal F bei dem Kurzschlusssteuermodul 60 eingeht, wird dieses den Halbleiterleistungsschalter 40 mittels eines Zündsignals ZS einschalten, so dass ein Teil des auszuschaltenden Gleichstroms I durch den Halbleiterleistungsschalter 40 umgeleitet wird. Der durch den Halbleiterleistungsschalter 40 fließende Strom ist in der Figur 6 mit dem Bezugszeichen I2 gekennzeichnet; der Stromanteil, der durch die beiden mechanischen Schalter 20 und 30 fließt, trägt in der Figur 6 das Bezugszeichen I1.

Anschließend wird der zweite, relativ schnell schaltende Schalter 30 mittels eines Schaltsignals S2 ausgeschaltet, sodass der gesamte Gleichstrom I durch den Halbleiterleistungsschalter 40 fließen wird. Dieser Zustand ist in der Figur 7 dargestellt.

Nachdem der zweite Schalter 30 vollständig ausgeschaltet ist, wovon das Kurzschlusssteuermodul 60 beispielsweise nach Ablauf einer modulindividuell vorgegebenen Zeitspanne ausgeht, wird das Kurzschlusssteuermodul 60 den Halbleiterleistungsschalter 40 mittels eines Abschaltsignals Sa ausschalten, so dass der Stromfluss durch die Gleichstromschalteinrichtung 10 vollständig unterbrochen wird. Dieser Schaltzustand ist in der Figur 8 gezeigt.

Da der zweite Schalter 30 deutlich schneller als der erste Schalter 20 schaltet, ist das Ausschalten der Gleichstromschalteinrichtung 10 im Falle des Vorliegens des Fehlersignals F mittels des Kurzschlusssteuermoduls 60 deutlich schneller als das Ausschalten, wenn statt des Fehlersignals F lediglich ein Bediensignal B am Eingang 70a des Betriebsmoduls 70 anliegt. Das Ausschalten der Gleichstromschalteinrichtung mittels des zweiten Schalters 30 erfolgt vorzugsweise innerhalb einer Schaltzeit von maximal 2 ms.

Im Zusammenhang mit den Figuren 9 bis 12 soll nachfolgend das Schaltverhalten der Gleichstromschalteinrichtung 10 erläutert werden, wenn zunächst ein Bediensignal B, mit dem ein Abschaltbedienbefehl angezeigt wird, am Eingang 70a des Betriebsmoduls 70 und anschließend während des Ausschaltens der Gleichstromschalteinrichtung 10 im Normalbetrieb zusätzlich ein Fehlersignal F am Eingang 60a des Kurzschlusssteuermoduls 60 eingeht.

Ausgehend von dem Schaltzustand gemäß Figur 2 wird bei Eingang des Bediensignals B am Eingang 70a des Betriebsmoduls 70 das Betriebsmodul 70 zunächst den Halbleiterleistungsschalter 40 mittels eines Zündsignals ZS einschalten, um ein zumindest teilweises Umlenken des Gleichstroms I in den Pfad mit dem Halbleiterleistungsschalter 40 zu erzwingen. Es wird zu einem Aufteilen des Gleichstroms kommen, wie im Zusammenhang mit der Figur 9 dargestellt ist.

Anschließend wird das Betriebsmodul 70 den ersten Schalter 20 mittels eines Schaltsignals S1 ausschalten, was aufgrund der relativ langen Schaltzeit des ersten Schalters 20 relativ lange, beispielsweise mindestens 10 ms, dauert (vgl. Figur 10) .

Kommt es nun innerhalb der Schaltzeit des ersten Schalters 20 zu einem zusätzlichen Auftretens des Fehlersignals F am Eingang 60a des Kurzschlusssteuermoduls 60 (vgl. Figur 10), so wird das Kurzschlusssteuermodul 60 in oben beschriebener Weise zunächst ein eigenes Zündsignal ZS für den Halbleiterleistungsschalter 40 erzeugen und anschließend den zweiten Schalter 30 mittels des Schaltsignals S2 öffnen und ein Abschalten des durch die Reihenschaltung R fließenden Stroms I1 durch den zweiten Schalter 30 unabhängig von dem parallel laufenden Schaltvorgang des ersten Schalters 20 erzwingen (vgl. Figur 11).

Sobald durch die Reihenschaltung R kein Strom mehr fließt, wovon das Kurzschlusssteuermodul 60 und/oder das Betriebsmodul 70 beispielsweise nach Ablauf einer modulindividuell vorgegebenen Zeitspanne ausgehen, wird das Kurzschlusssteuermodul 60 und/oder das Betriebsmodul 70 den Halbleiterleistungsschalter 40 abschalten, so dass der Stromfluss I abgeschaltet wird und dieser einen Wert von I = 0 annimmt (vgl. Figur 12).

Alternativ kann vorgesehen sein, dass das Kurzschlusssteuermodul 60 bei zusätzlichem Auftreten des Fehlersignals F den zweiten Schalter 30 unmittelbar öffnet und ein Abschalten des durch die Reihenschaltung R fließenden Stroms I1 mittels des zweiten Schalters 30 unmittelbar erzwingt, ohne vorher selbst den (bereits gezündeten) Halbleiterleistungschalter 40 nochmals zünden bzw. einschalten zu wollen. Um ein solches unmittelbares Ausschalten zu ermöglichen, überträgt das Betriebsmodul 70 seinen Einschaltbefehl für den Halbleiterleistungsschalter 40 bzw. das Zündsignal ZS vorzugsweise zusätzlich auch an das Kurzschlusssteuermodul 60, so dass letzterem das Einschalten des Halbleiterleistungsschalters 40 jeweils stets bekannt ist. Eine solche Variante zeigt beispielhaft die Figur 13, die insoweit die oben beschriebene Figur 9 modifiziert.

Zu der Gleichstromschalteinrichtung 10 kann elektrisch ein Spannungsableiter parallel geschaltet sein; ein solcher Spannungsableiter ist in den Figuren der Übersicht halber nicht gezeigt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Gleichstromschalteinrichtung (10) zum Schalten von Gleichströmen (I), insbesondere Gleichströmen im Kiloamperbereich, mit

   - einer elektrischen Reihenschaltung (R), die einen ersten und einen zweiten Schalter (20, 30) umfasst, wobei der erste Schalter (20) ein mechanischer Schalter ist und zum Schalten ein bewegliches Kontaktsystem aufweist, und
   - einem Halbleiterleistungsschalter (40), der parallel zu der Reihenschaltung (R) geschaltet ist, wobei
   - der zweite Schalter (30) der Reihenschaltung (R) ebenfalls ein mechanischer Schalter ist und zum Schalten ebenfalls ein bewegliches Kontaktsystem aufweist und
   - das bewegliche Kontaktsystem des zweiten Schalters (30) derart ausgestaltet ist, dass es schneller als das bewegliche Kontaktsystem des ersten Schalters (20) schalten kann,

   **dadurch gekennzeichnet, dass** die Gleichstromschalteinrichtung (10) eine Steuereinrichtung (50) aufweist, die im Falle eines Fehlers, zum Abschalten des Fehlerstromes, ausschließlich den Halbleiterleistungsschalter (40) und den zweiten Schalter (30) und während des Normalbetriebs im Falle einer Betriebshandlung zum Ausschalten des Normalbetriebstromes ausschließlich den Halbleiterleistungsschalter (40) und den ersten Schalter (20) betätigt.

2. Gleichstromschalteinrichtung (10) nach Anspruch 1, **dadurch gekennzeichnet, dass** der erste und zweite Schalter (20, 30) im ausgeschalteten Zustand jeweils für sich allein geeignet sind, die im Netzbetrieb im ausgeschalteten Zustand der Gleichstromschalteinrichtung (10) an der Gleichstromschalteinrichtung (10) anliegende Netzspannung allein zu halten.

3. Gleichstromschalteinrichtung (10) nach Anspruch 1 oder 2,
   **dadurch gekennzeichnet, dass** die Steuereinrichtung (50) derart ausgestaltet ist, dass sie, ausgehend vom eingeschalteten Zustand der Gleichstromschalteinrichtung (10), bei dem der Halbleiterleistungsschalter (40) ausgeschaltet und der erste und zweite Schalter (20, 30) eingeschaltet sind,

   - im Falle eines Fehlers, insbesondere eines Kurzschlusses, zunächst den Halbleiterleistungsschalter (40) einschaltet und den Fehlerstrom, insbesondere Kurzschlussstrom, zumindest zum Teil durch den Halbleiterleistungsschalter (40) lenkt, anschließend den zweiten Schalter (30) ausschaltet und den ersten Schalter (20) eingeschaltet lässt und nach dem Ausschalten des zweiten Schalters (30) den Halbleiterleistungsschalter (40) abschaltet, und
   - im Normalbetrieb im Falle einer Betriebshandlung zum Ausschalten des Normalbetriebstromes zunächst den Halbleiterleistungsschalter (40) einschaltet und den Normalbetriebstrom zumindest zum Teil durch den Halbleiterleistungsschalter (40) lenkt, anschließend den ersten Schalter (20) ausschaltet und den zweiten Schalter (30) eingeschaltet lässt und nach dem Ausschalten des ersten Schalters (20) den Halbleiterleistungsschalter (40) abschaltet.

**4.** Gleichstromschalteinrichtung (10) nach einem der voranstehenden Ansprüche,
**dadurch gekennzeichnet, dass** die Gleichstromschalteinrichtung (10) ein Kurzschlusssteuermodul (60) zur Handhabung eines Fehlers, insbesondere eines Kurzschlusses, und ein Betriebsmodul (70) zum Handhaben eines Ausschaltbefehls während des Normalbetriebs aufweist.

**5.** Gleichstromschalteinrichtung (10) nach Anspruch 4,
**dadurch gekennzeichnet, dass**

- das Kurzschlusssteuermodul (60) einen Eingang (60a) zum Einspeisen eines einen Fehler, insbesondere Kurzschluss, anzeigenden Fehlersignals (F) aufweist und
- das Betriebsmodul (70) einen Eingang (70a) zum Einspeisen eines einen Abschaltbedienbefehl anzeigenden Bediensignals (B) aufweist.

**6.** Gleichstromschalteinrichtung (10) nach Anspruch 4 oder 5,
**dadurch gekennzeichnet, dass** das Kurzschlusssteuermodul (60) derart ausgestaltet ist, dass es, ausgehend vom eingeschalteten Zustand der Gleichstromschalteinrichtung (10), bei dem der Halbleiterleistungsschalter (40) ausgeschaltet und der erste und zweite Schalter (20, 30) eingeschaltet sind, im Falle eines Vorliegens eines Fehlersignals (F) zunächst den Halbleiterleistungsschalter (40) einschaltet und den Fehlerstrom, insbesondere Kurzschlussstrom, zumindest zum Teil durch den Halbleiterleistungsschalter (40) lenkt, anschließend den zweiten Schalter (30) ausschaltet und den ersten Schalter (20) eingeschaltet lässt und nach dem Ausschalten des zweiten Schalters (30) den Halbleiterleistungsschalter (40) abschaltet.

**7.** Gleichstromschalteinrichtung (10) nach einem der voranstehenden Ansprüche 4-6,
**dadurch gekennzeichnet, dass** das Betriebsmodul (70) derart ausgestaltet ist, dass es, ausgehend vom eingeschalteten Zustand der Gleichstromschalteinrichtung (10), bei dem der Halbleiterleistungsschalter (40) ausgeschaltet und der erste und zweite Schalter (20, 30) eingeschaltet sind, im Falle eines Vorliegens eines Bediensignals (B) zunächst den Halbleiterleistungsschalter (40) einschaltet und den Normalbetriebsstrom zumindest zum Teil durch den Halbleiterleistungsschalter (40) lenkt, anschließend den ersten Schalter (20) ausschaltet und den zweiten Schalter (30) eingeschaltet lässt und nach dem Ausschalten des ersten Schalters (20) den Halbleiterleistungsschalter (40) abschaltet.

**8.** Gleichstromschalteinrichtung (10) nach einem der voranstehenden Ansprüche,
**dadurch gekennzeichnet, dass**

- der erste Schalter (20) eine Schaltzeit von mindestens 10 Millisekunden und
- der zweite Schalter (30) eine Schaltzeit von maximal 2 Millisekunden aufweist.

**9.** Gleichstromschalteinrichtung (10) nach einem der voranstehenden Ansprüche,
**dadurch gekennzeichnet, dass**

- der erste Schalter (20) konstruktiv für eine Anzahl von nominal mindestens 1000 Schalthandlungen ausgelegt ist und
- der zweite Schalter (30) konstruktiv für eine Anzahl von nominal maximal 100 Schalthandlungen ausgelegt ist.

**10.** Verfahren zum Abschalten einer Gleichstromschalteinrichtung (10) zum Schalten von Gleichströmen (I), insbesondere Gleichströmen im Kiloamperbereich, mit einer elektrischen Reihenschaltung (R), die einen ersten und einen zweiten Schalter (20, 30) umfasst, und mit einem Halbleiterleistungsschalter (40), der parallel zu der Reihenschaltung (R) geschaltet ist,

- wobei der erste und zweite Schalter (20, 30) jeweils ein mechanischer Schalter ist und zum Schalten ein bewegliches Kontaktsystem aufweist und der zweite Schalter (30) eine kürzere Schaltzeit als der erste Schalter (20) aufweist,

**dadurch gekennzeichnet**, dassbei dem Verfahren im Falle eines Fehlers, insbesondere eines Kurzschlusses, zum Abschalten des Fehlerstromes, insbesondere des Kurzschlussstromes, ausschließlich der Halbleiterleistungsschalter (40) und der zweite Schalter (30) und während des Normalbetriebs im Falle einer Betriebshandlung zum Ausschalten des Normalbetriebsstromes ausschließlich der Halbleiterleistungsschalter (40) und der erste Schalter (20) betätigt werden.

**11.** Verfahren nach Anspruch 10,
**dadurch gekennzeichnet, dass** im Falle einer Betriebshandlung zum Ausschalten des Normalbetriebstromes und im Falle eines Eintretens eines Fehlers, insbesondere Kurzschlusses, nach der Betriebshandlung und während des Ausschaltens des ersten Schalters (20) parallel der zweite Schalter (30) ausgeschaltet wird und nach dem Ausschalten des ersten und/oder zweiten Schalters (20, 30) der Halbleiterleistungsschalter (40) abgeschaltet wird.

**Claims**

**1.** DC switching device (10) for switching direct currents (I), in particular direct currents in the kiloampere range, comprising

- an electrical series connection (R), which comprises a first and a second switch (20, 30), wherein the first switch (20) is a mechanical switch and has a movable contact system for the purpose of switching, and
- a semiconductor power switch (40), which is connected in parallel with the series connection (R), wherein
- the second switch (30) of the series connection (R) is likewise a mechanical switch and likewise has a movable contact system for the purpose of switching and
- the movable contact system of the second switch (30) is configured in such a way that it can switch faster than the movable contact system of the first switch (20),

**characterized in that** the DC switching device (10) has a control device (50), which, in the event of a fault, actuates exclusively the semiconductor power switch (40) and the second switch (30) in order to disconnect the fault current and which, during normal operation, in the event of operative action, actuates exclusively the semiconductor power switch (40) and the first switch (20) in order to switch off the normal-operation current.

**2.** DC switching device (10) according to Claim 1, **characterized in that**, in the off state, the first and second switches (20, 30) are each individually suitable for withstanding the mains voltage alone applied to the DC switching device (10) during mains operation in the off state of the DC switching device (10).

**3.** DC switching device (10) according to Claim 1 or 2, **characterized in that** the control device (50) is configured in such a way that, starting from the on state of the DC switching device (10), in which the semiconductor power switch (40) is off and the first and second switches (20, 30) are on, said control device

- in the event of a fault, in particular a short circuit, first of all switches on the semiconductor power switch (40) and directs at least some of the fault current, in particular short-circuit current, through the semiconductor power switch (40), then switches off the second switch (30) and leaves the first switch (20) on and, after switching off the second switch (30), disconnects the semiconductor power switch (40), and
- during normal operation, in the event of operative action, in order to switch off the normal-operation current, first of all switches on the semiconductor power switch (40) and directs at least some of the normal-operation current through the semiconductor power switch (40), then switches off the first switch (20) and leaves the second switch (30) on and, after switching off the first switch (20), disconnects the semiconductor power switch (40).

**4.** DC switching device (10) according to one of the preceding claims, **characterized in that** the DC switching device (10) has a short-circuit control module (60) for handling a fault, in particular a short circuit, and an operating module (70) for handling a switch-off command during normal operation.

**5.** DC switching device (10) according to Claim 4, **characterized in that**

- the short-circuit control module (60) has an input (60a) for supplying a fault signal (F) that indicates a fault, in particular a short circuit, and
- the operating module (70) has an input (70a) for supplying an operator signal (B) that indicates a disconnection operator command.

**6.** DC switching device (10) according to Claim 4 or 5, **characterized in that** the short-circuit control module (60) is configured in such a way that, starting from the on state of the DC switching device (10), in which the semiconductor power switch (40) is off and the first and second switches (20, 30) are on, in the event of there being a fault signal (F), said short-circuit control module first of all switches on the semiconductor power switch (40) and directs at least some of the fault current, in particular the short-circuit current, through the semiconductor power switch (40), then switches off the second switch (30) and leaves the first switch (20) on and, after switching off the second switch (30), disconnects the semiconductor power switch (40).

**7.** DC switching device (10) according to one of the preceding Claims 4-6, **characterized in that** the operating module (70) is configured in such a way that, starting from the on state of the DC switching device (10), in which the semiconductor power switch (40) is off and the first and second switches (20, 30) are on, in the event of there being an operator signal (B), said operating module first of all switches on the semiconductor power switch (40) and directs at least some of the normal-operation current through the semiconductor power switch (40), then switches off the first switch (20) and leaves the second switch (30) on and, after switching off the first switch (20), disconnects the semiconductor power switch (40).

**8.** DC switching device (10) according to one of the preceding claims, **characterized in that**

- the first switch (20) has a switching time of at least 10 milliseconds and
- the second switch (30) has a switching time of at most 2 milliseconds.

**9.** DC switching device (10) according to one of the preceding claims, **characterized in that**

- the first switch (20) is physically designed for a number of nominally at least 1000 switching actions and
- the second switch (30) is physically designed for a number of nominally at most 100 switching actions.

**10.** Method for disconnecting a DC switching device (10) for switching direct currents (I), in particular direct currents in the kiloampere range, comprising an electrical series connection (R), which comprises a first and a second switch (20, 30), and comprising a semiconductor power switch (40), which is connected in parallel with the series connection (R),

- wherein the first and second switches (20, 30) are each a mechanical switch and each have a movable contact system for the purpose of switching and the second switch (30) has a shorter switching time than the first switch (20),

**characterized in that**, in said method, in the event of a fault, in particular a short circuit, exclusively the semiconductor power switch (40) and the second switch (30) are actuated in order to disconnect the fault current, in particular the short-circuit current, and during normal operation, in the event of operative action, exclusively the semiconductor power switch (40) and the first switch (20) are actuated in order to switch off the normal-operation current.

**11.** Method according to Claim 10, **characterized in that**, in the event of operative action, in order to switch off the normal-operation current, and in the event of a fault occurring, in particular a short circuit, after the operative action and during switch-off of the first switch (20), the second switch (30) is switched off in parallel and, after switch-off of the first and/or second switch (20, 30), the semiconductor power switch (40) is disconnected.

**Revendications**

**1.** Dispositif (10) d’interruption de courant continu pour l’interruption de courants (I) continus, notamment de courants continus dans le domaine du kiloampère, comprenant

- un circuit (R) électrique série, qui comprend un premier et un deuxième interrupteurs (20, 30), le premier interrupteur (20) étant un interrupteur mécanique et ayant, pour l’interruption, un système de contact mobile et
- un interrupteur (40) de puissance à semi-conducteur, qui est monté en parallèle au circuit (R) série, dans lequel
- le deuxième interrupteur (30) du circuit (R) série est également un interrupteur mécanique et a, pour l’interruption, également un système de contact mobile et
- le système de contact mobile du deuxième interrupteur (30) est conformé de manière à pouvoir interrompre plus vite que le système de contact mobile du premier interrupteur (20),

**caractérisé en ce que**
le dispositif (10) d’interruption de courant continu a un dispositif (50) de commande, qui, dans le cas d’un défaut, pour interrompre le courant de défaut, actionne exclusivement l’interrupteur (40) de puissance à semi-conducteur et le deuxième interrupteur (30) et, pendant le fonctionnement normal, dans le cas d’une manipulation de fonctionnement pour interrompre le courant de fonctionnement normal, exclusivement l’interrupteur (40) de puissance à semiconducteur et le premier interrupteur (20).

**2.** Dispositif (10) d’interruption de courant continu suivant la revendication 1,
**caractérisé en ce que**
le premier et le deuxième interrupteur (20, 30) sont, à l’état ouvert, propres chacun pour soi, à maintenir seuls la tension du réseau s’appliquant en fonctionnement sous réseau à l’état ouvert du dispositif (10) d’interruption du courant continu.

**3.** Dispositif (10) d’interruption de courant continu suivant la revendication 1 ou 2,
**caractérisé en ce que**
le dispositif (50) de commande est conformé de manière, en partant de l’état fermé du dispositif (10) d’interruption du courant continu, dans lequel l’interrupteur (40) de puissance à semi-conducteur est ouvert et le premier et le deuxième interrupteurs (20, 30) sont fermés,

- dans le cas d’un défaut, notamment d’un court circuit, à fermer d’abord l’interrupteur (40) de puissance à semi-conducteur et à faire passer le courant de défaut, notamment le courant de court-circuit, au moins en partie, dans l'interrupteur (40) de puissance à semi-conducteur, ensuite à ouvrir le deuxième interrupteur (30) et à laisser le premier interrupteur (20) fermé et, après l'ouverture du deuxième interrupteur (30), à mettre hors circuit l'interrupteur (40) de puissance à semi-conducteur et

- en fonctionnement normal, dans le cas d'une manipulation de fonctionnement pour interrompre le courant de fonctionnement normal, à fermer d'abord l'interrupteur (40) de puissance à semi-conducteur et à faire passer le courant de fonctionnement normal, au moins en partie, dans l'interrupteur (40) de puissance à semi-conducteur, à ouvrir ensuite le premier interrupteur (20) et à laisser fermé le deuxième interrupteur (30) et, après l'ouverture du premier interrupteur (20), à mettre l'interrupteur (40) de puissance à semi-conducteur hors circuit.

**4.** Dispositif (10) d'interruption de courant continu suivant l'une des revendications précédentes, **caractérisé en ce que** le dispositif (10) d'interruption du courant continu a un module (60) de commande de court-circuit pour le traitement d'un défaut, notamment d'un court-circuit, et un module (70) de fonctionnement pour le traitement d'une instruction d'ouverture pendant le fonctionnement normal.

**5.** Dispositif (10) d'interruption de courant continu suivant la revendication 4, **caractérisé en ce que**

- le module (60) de commande de court-circuit a une entrée (60a) d'injection d'un signal (F) de défaut indiquant un défaut, notamment un court-circuit, et
- le module (70) de fonctionnement a une entrée (70a) d'injection d'un signal (B) de service indiquant une instruction de service de mise hors circuit.

**6.** Dispositif (10) d'interruption de courant continu suivant la revendication 4 ou 5, **caractérisé en ce que** le module (60) de commande de court-circuit est conformé de manière, à partir d'un état fermé du dispositif (10) d'interruption du courant continu, dans lequel l'interrupteur (40) de puissance à semi-conducteur est ouvert et le premier et le deuxième interrupteurs (20, 30) sont fermés, dans le cas d'une présence d'un signal (F) de défaut, à fermer d'abord l'interrupteur (40) de puissance à semi-conducteur et à faire passer le courant de défaut, notamment le courant de court-circuit, au moins en partie, dans l'interrupteur (40) de puissance à semi-conducteur, ensuite à ouvrir le deuxième interrupteur (30) et à laisser fermé le premier interrupteur (20) et, après l'ouverture du deuxième interrupteur (30), à mettre l'interrupteur (40) de puissance à semi-conducteur hors circuit.

**7.** Dispositif (10) d'interruption de courant continu suivant l'une des revendications précédentes 4 à 6, **caractérisé en ce que** le module (70) de fonctionnement est conformé de manière, à partir d'un état fermé du dispositif (10) d'interruption du courant continu, dans lequel l'interrupteur (40) de puissance à semi-conducteur est ouvert et le premier et le deuxième interrupteurs (20, 30) sont fermés, dans le cas de la présence d'un signal (B) de service, à ouvrir d'abord l'interrupteur (40) de puissance à semi-conducteur et à faire passer le courant de fonctionnement normal, au moins en partie, dans l'interrupteur (40) de puissance à semi-conducteur, ensuite à laisser ouvrir le premier interrupteur (20) et à laisser fermé le deuxième interrupteur (30) et, après ouverture du premier interrupteur (20), à mettre hors circuit l'interrupteur (40) de puissance à semi-conducteur.

**8.** Dispositif (10) d'interruption de courant continu suivant l'une des revendications précédentes, **caractérisé en ce que**

- le premier interrupteur (20) a un temps de réponse d'au moins 10 millisecondes et
- le deuxième interrupteur (30) a un temps de réponse d'au maximum 2 millisecondes.

**9.** Dispositif (10) d'interruption de courant continu suivant l'une des revendications précédentes, **caractérisé en ce que**

- le premier interrupteur (20) est conçu par construction pour un nombre nominalement d'au moins 1000 manipulations de commutation et
- le deuxième interrupteur (30) est conçu par construction pour un nombre nominalement au maximum de 100 manipulations de commutation.

**10.** Procédé de mise hors circuit d'un dispositif (10) d'interruption du courant continu pour interrompre des courants (I) continus, notamment des courants continus dans le domaine du kiloampère, comprenant un circuit (R) électrique série, qui comprend un premier et un deuxième interrupteurs (20, 30) et comprenant un interrupteur (40) de puissance à semi-conducteur, monté en parallèle au circuit (R) série,

- dans lequel le premier et le deuxième interrupteurs (20, 30) sont respectivement des interrupteurs mécaniques et ont, pour la commutation, un système de contact mobile et le deuxième interrupteur (30) a un temps de réponse plus court que le premier interrupteur (20),

**caractérisé en ce que**
dans le procédé, dans le cas d'un défaut, notamment d'un court circuit, pour interrompre le courant de défaut, notamment le courant de court-circuit, on actionne exclusivement l'interrupteur (40) de puissance à semi-conducteur et le deuxième interrupteur (30) et pendant le fonctionnement normal, dans le cas d'une manipulation de fonctionnement, pour interrompre le courant de fonctionnement normal, on actionne exclusivement l'interrupteur (40) de puissance à semi-conducteur et le premier interrupteur (20).

**11.** Procédé suivant la revendication 10,
**caractérisé en ce que**,
dans le cas d'une manipulation de fonctionnement pour interrompre le courant de fonctionnement normal et dans le cas de l'apparition d'un défaut, notamment d'un court circuit, après la manipulation de fonctionnement et pendant l'ouverture du premier interrupteur (20), on ouvre en parallèle le deuxième interrupteur (30) et, après l'ouverture du premier et/ou du deuxième interrupteur (20), on met l'interrupteur (40) de puissance à semi-conducteur hors circuit.

FIG 1

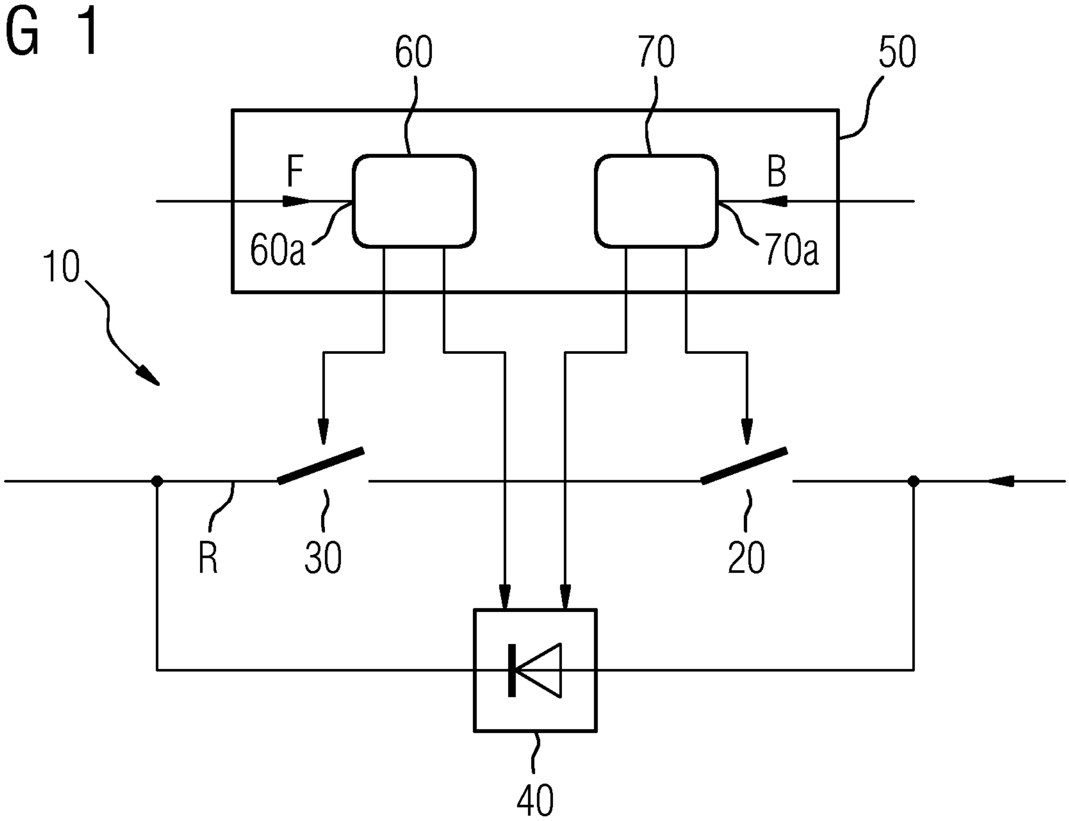


FIG 2

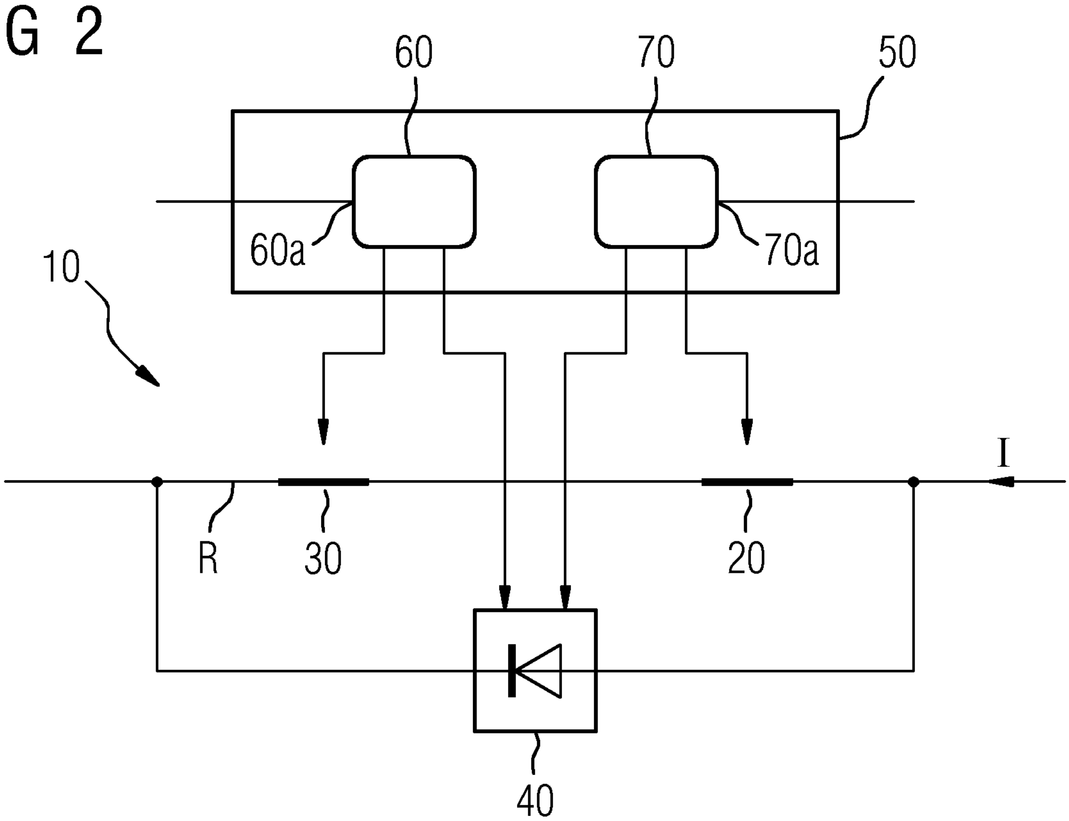

FIG 3

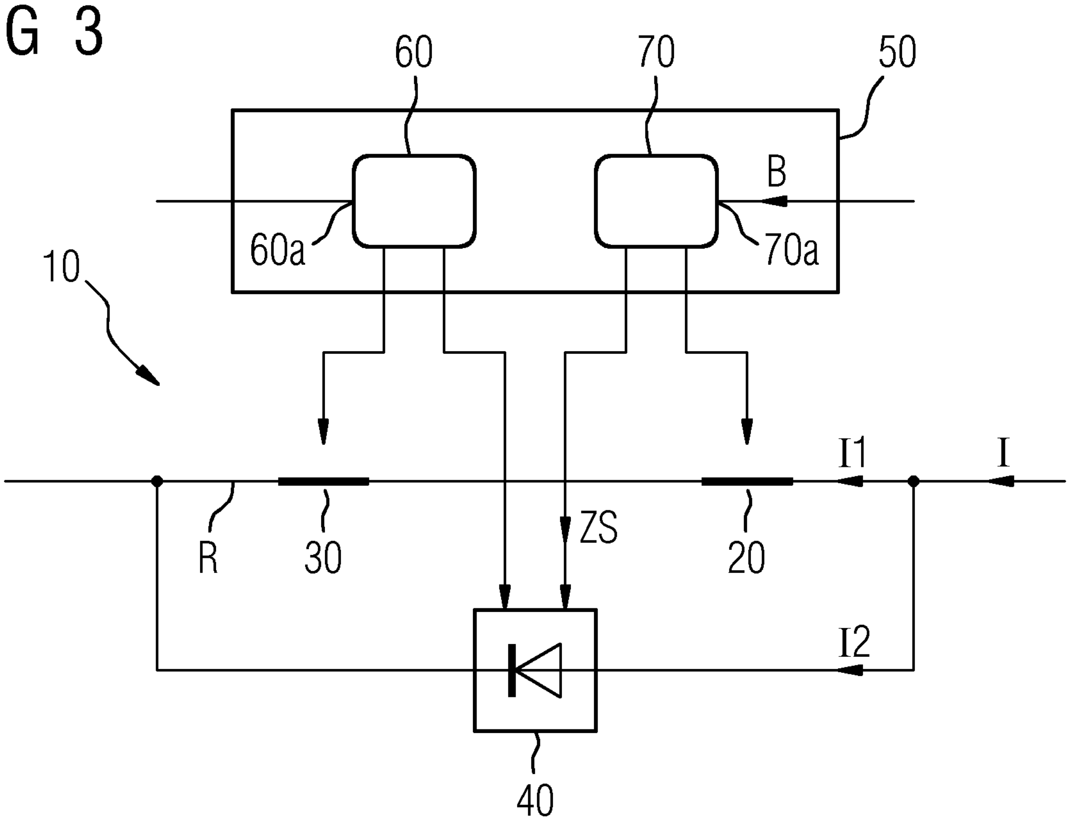
60
70
50
B
60a
70a
10
I1
I
R
30
ZS
20
I2
40

FIG 4

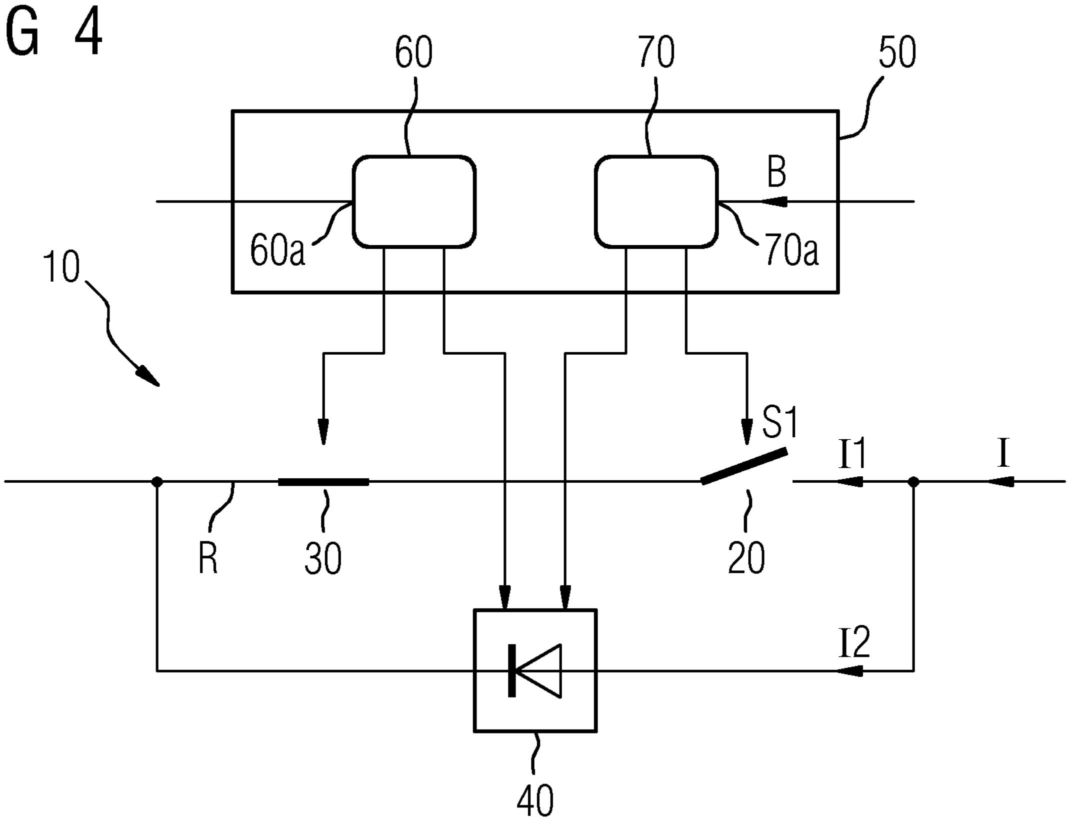
60
70
50
B
60a
70a
10
S1
I1
I
R
30
20
I2
40

FIG 5

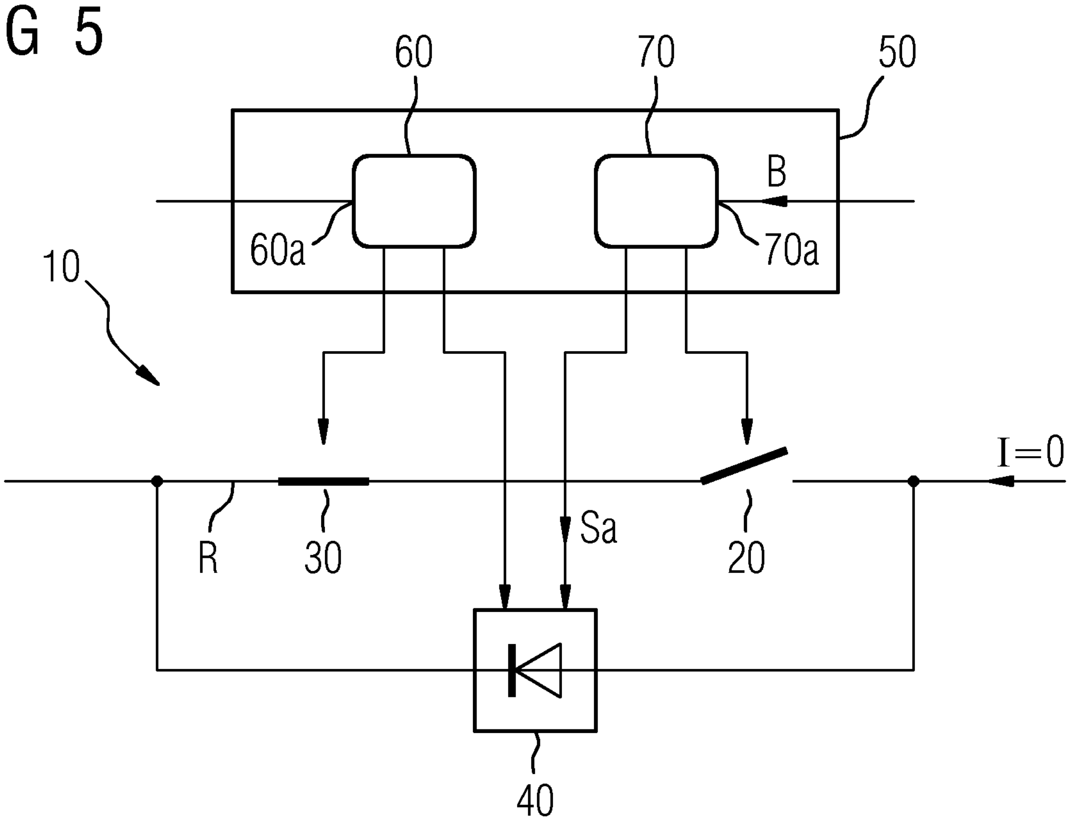
60
70
50
B
60a
70a
10
I=0
R
30
Sa
20
40

FIG 6

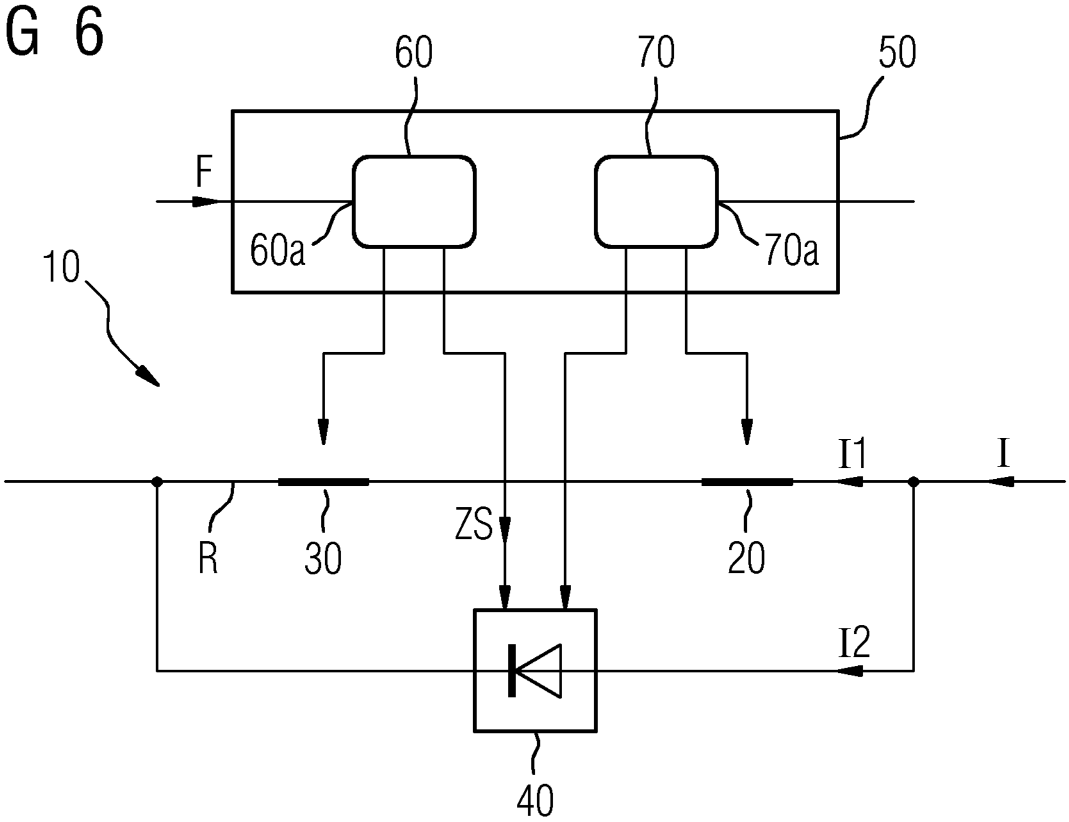
60
70
50
F
60a
70a
10
I1
I
R
30
ZS
20
I2
40

FIG 7

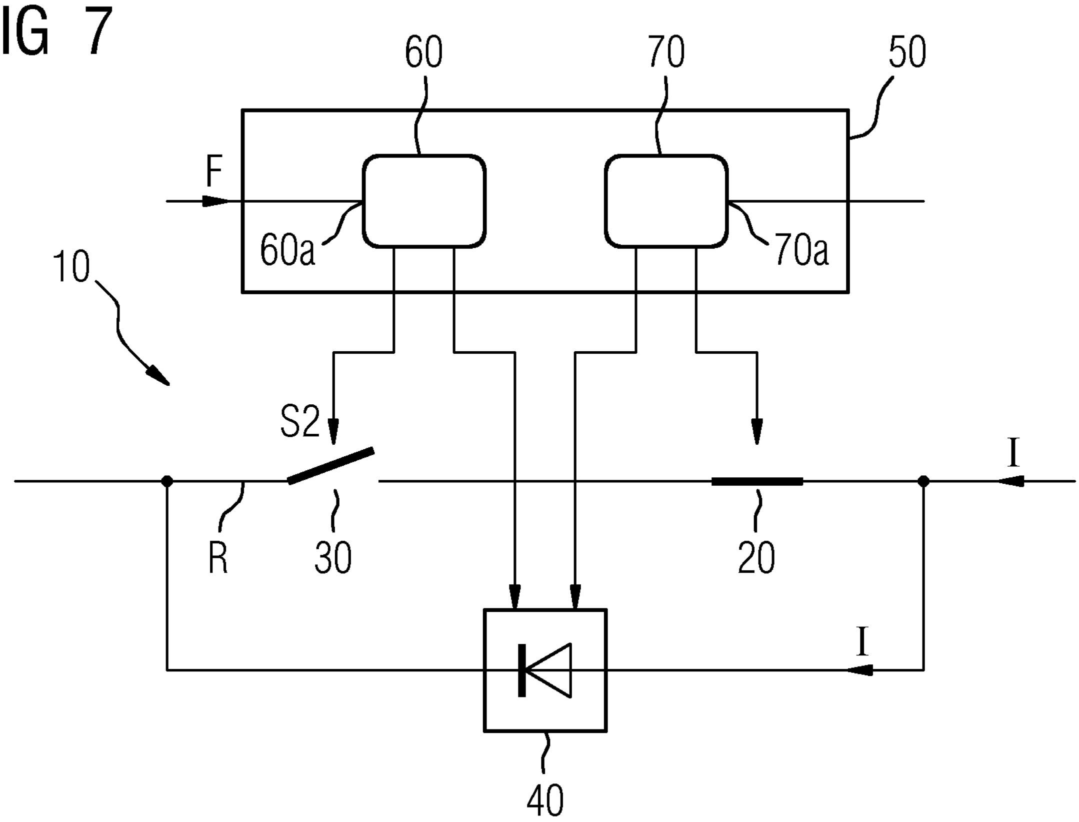
60
70
50
F
60a
70a
10
S2
I
R
30
20
I
40

FIG 8

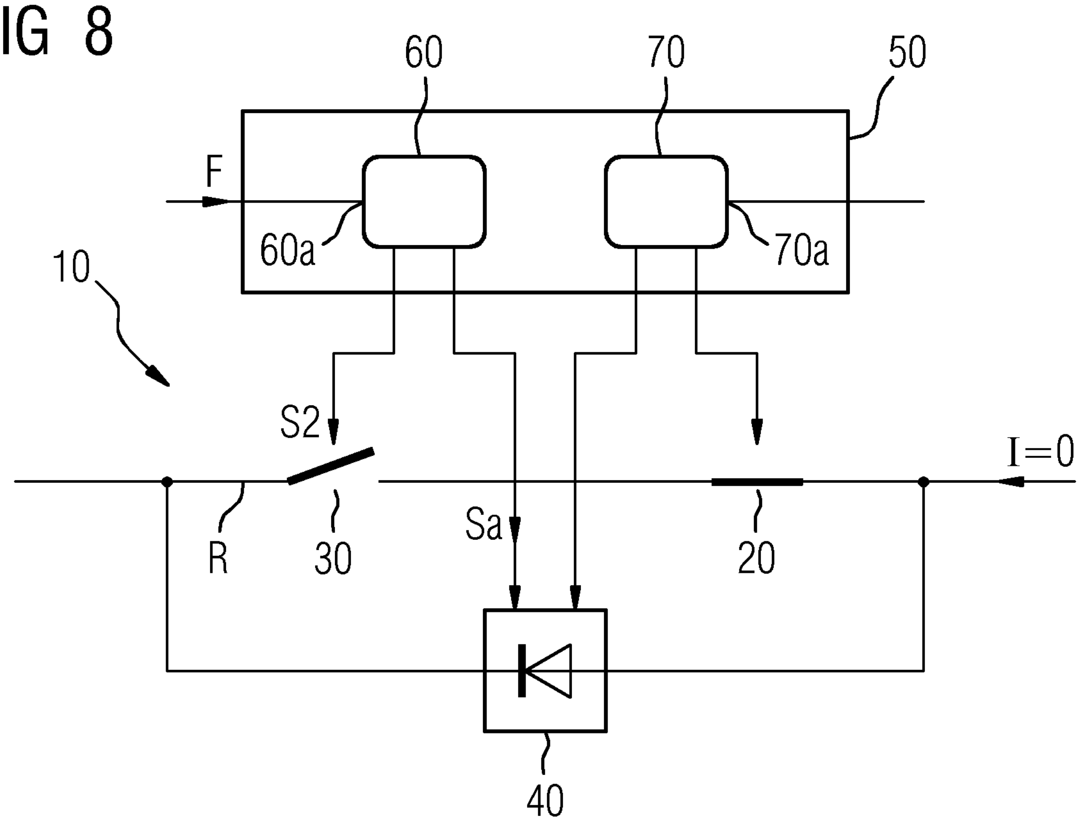
60
70
50
F
60a
70a
10
S2
I=0
R
30
Sa
20
40

FIG 9

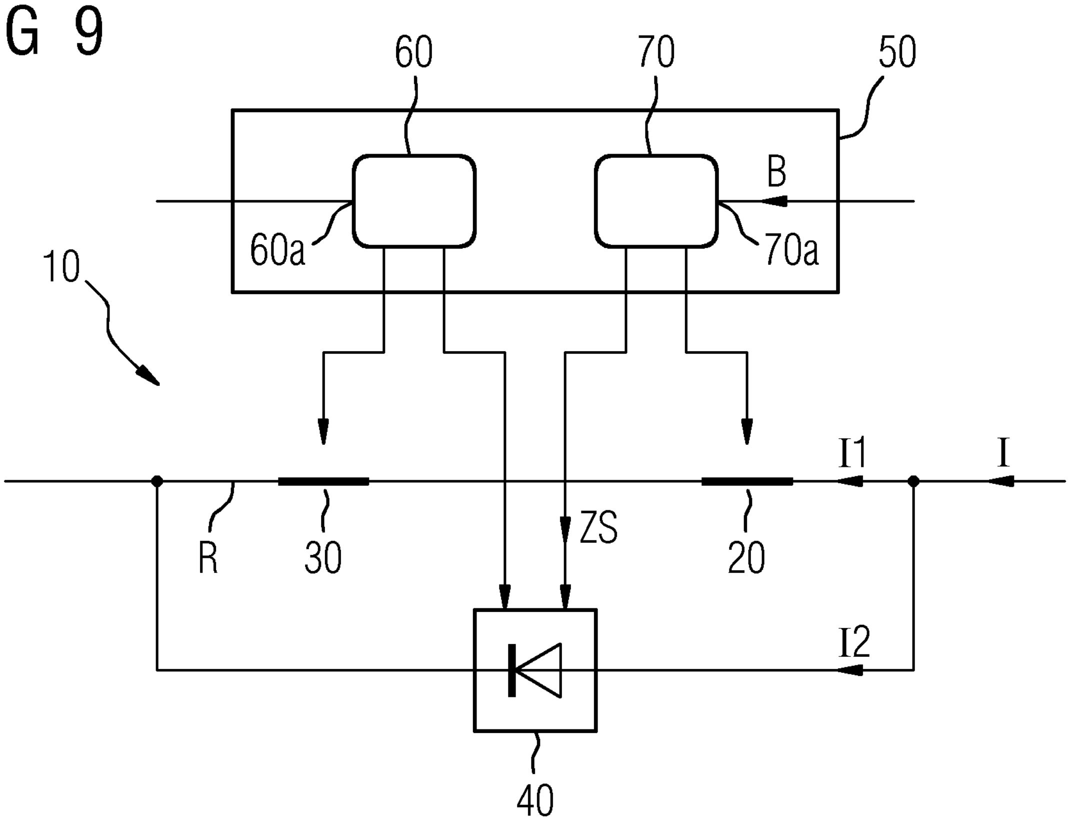
60
70
50
B
60a
70a
10
I1
I
R
30
ZS
20
I2
40

FIG 10

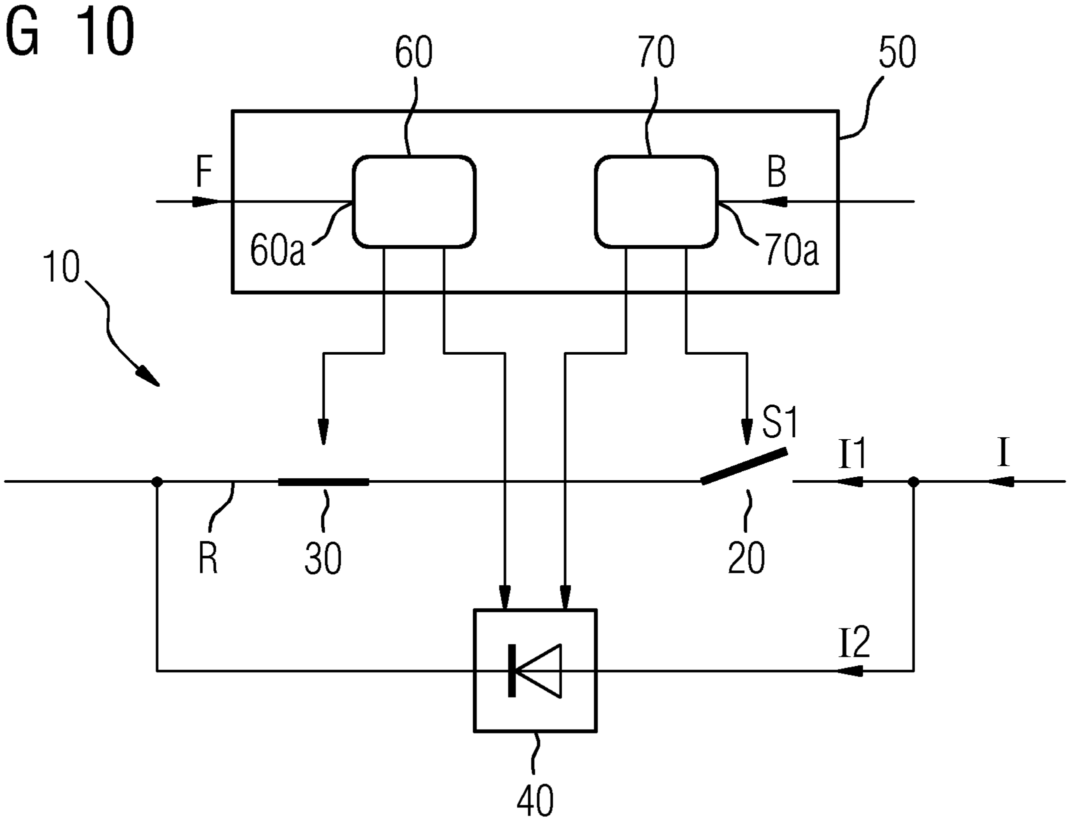
60
70
50
F
B
60a
70a
10
S1
I1
I
R
30
20
I2
40

FIG 11

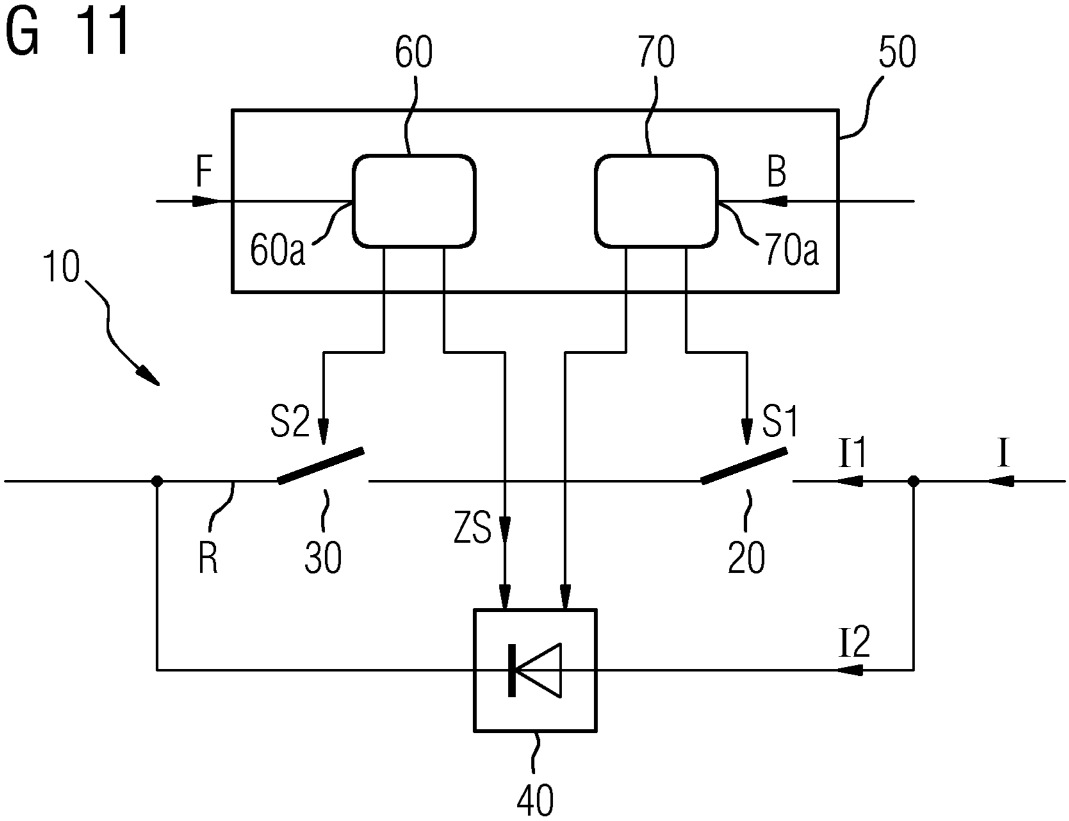
60
70
50
F
B
60a
70a
10
S2
S1
I1
I
R
30
ZS
20
I2
40

FIG 12

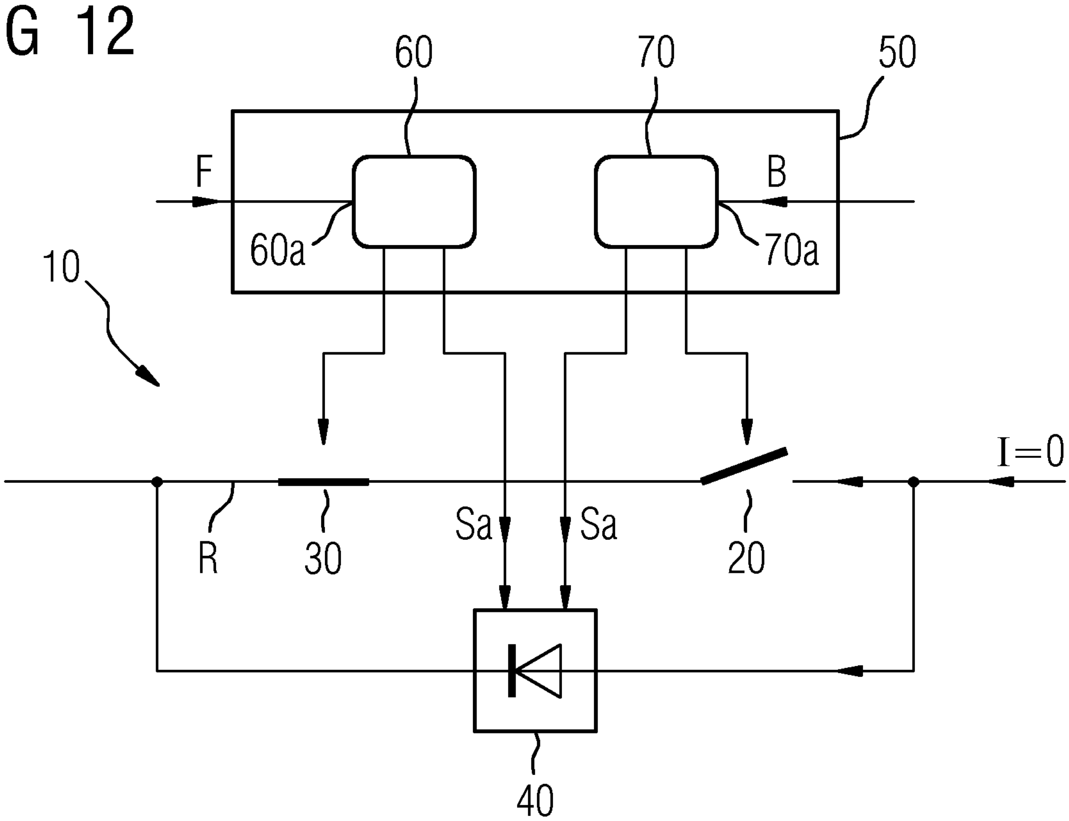
60
70
50
F
B
60a
70a
10
I=0
R
30
Sa
Sa
20
40

FIG 13

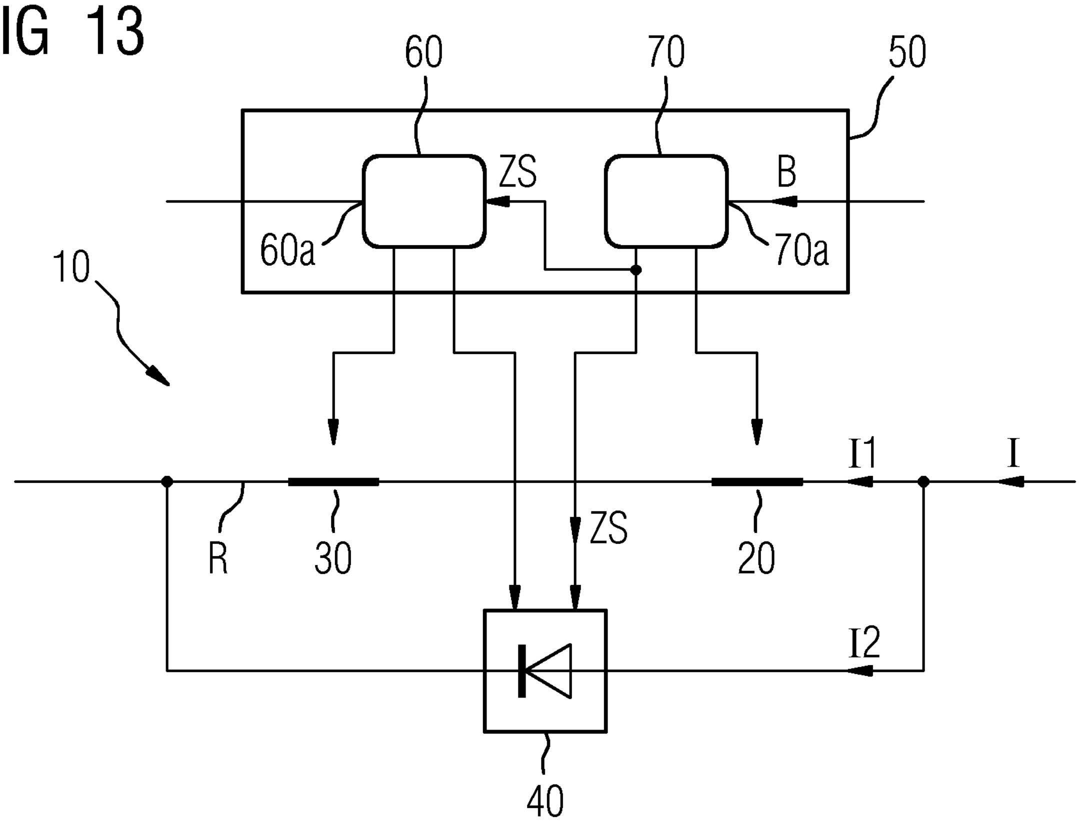

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10002870 A1


### In der Beschreibung aufgeführte Nicht-Patentliteratur


- **JÜRGEN HÄFNER ; BJÖRN JACOBSON ; CIGRÉ-KONFERENZ.** *Proactive Hybrid HVDC Breakers - A key innovation for reliable HVDC grids,* 2011